(19) Europäisches Patentamt

European Patent Office

Office européen des brevets

(11) **EP 1 127 231 B1**

(12) **EUROPÄISCHE PATENTSCHRIFT**

(45) Veröffentlichungstag und Bekanntmachung des
Hinweises auf die Patenterteilung:
**04.06.2003 Patentblatt 2003/23**

(51) Int Cl.[7]: **F16H 45/02**, F16H 61/14,
F16D 47/06

(21) Anmeldenummer: **00960615.3**

(22) Anmeldetag: **06.09.2000**

(86) Internationale Anmeldenummer:
**PCT/EP00/08705**

(87) Internationale Veröffentlichungsnummer:
**WO 01/018429 (15.03.2001 Gazette 2001/11)**

(54) **HYDRODYNAMISCHE KUPPLUNG**

HYDRODYNAMIC CLUTCH

EMBRAYAGE HYDRODYNAMIQUE

(84) Benannte Vertragsstaaten:
**AT BE CH CY DE DK ES FI FR GB GR IE IT LI LU
MC NL PT SE**

(30) Priorität: **07.09.1999 DE 19942578**

(43) Veröffentlichungstag der Anmeldung:
**29.08.2001 Patentblatt 2001/35**

(73) Patentinhaber: **Voith Turbo GmbH & Co. KG
89522 Heidenheim (DE)**

(72) Erfinder: **HOFFELD, Harald
74564 Crailsheim (DE)**

(74) Vertreter: **Koch, Annegret Christa et al
Dr. Weitzel & Partner
Patentanwälte
Friedenstrasse 10
D-89522 Heidenheim (DE)**

(56) Entgegenhaltungen:
**DE-C- 3 917 986      FR-A- 831 078
FR-A- 2 166 464      FR-A- 2 561 342
GB-A- 1 247 912**

EP 1 127 231 B1

**Beschreibung**

Die Erfindung betrifft eine hydrodynamische Kupplung, insbesondere eine Turbokupplung, im einzelnen mit den Merkmalen aus dem Oberbegriff des Anspruchs 1.

Hydrodynamische Kupplungen mit Schaltkupplungen zur Synchronisierung, insbesondere in Form von fliehkraftbetätigten Reibkupplungen, sind in einer Vielzahl von Ausführungen bekannt. Stellvertretend wird dabei auf die nachfolgend genannten Druckschriften verwiesen:

1. DE 31 19 171
2. Shinko Engineering Co., LTD.: "Shinko Fluid Couplings", EFK-012-1 100782T
3. "Hydromechanik Couplings"
4. DE 17 75 184

Jede der genannten Ausführungen umfaßt eine hydrodynamische Kupplung, insbesondere eine Turbokupplung, welche nach dem Föttingerpinzip arbeitet und bei welcher mittels einem Pumpenrad mechanische Energie in Form von Rotationsenergie der Antriebswelle in kinetische Energie, das heißt Strömungsenergie des Betriebsmediums umgewandelt wird, wobei diese Strömungsenergie abtriebsseitig von einem weiteren Schaufelrad wieder in Rotationsenergie zurückverwandelt wird. Als Betriebsmedium wird in erster Linie Öl und in einigen Sonderfällen auch Wasser verwendet. Derartige hydrodynamische Kupplungen bestehen im wesentlichen aus wenigstens drei Teilen, zwei Schaufelrädem - einem Außenrad und einem, von einer mit dem Außenrad gekoppelten Kupplungsschale umschlossenen Innenrad. Die Funktion der Schaufelräder als Pumpenrad und Turbinenrad hängt dabei in der Regel von der Richtung der Leistungsübertragung unter Berücksichtigung der Rotationsrichtung ab.

Wird das Pumpenrad angetrieben, das heißt das Außenrad oder das Innenrad, so entsteht im torusförmigen Arbeitsraum zwischen Außenrad und Innenrad in radialer und axialer Ebene ein Kreislauf des Betriebsmediums. Dabei wirkt eine Umfangskraft, die das Drehmoment überträgt und zusätzlich eine Axialkraft. Der Kreislauf bleibt erhalten, so lange eine Drehzahldifferenz in Form des sogenannten Schlupfes S zwischen Antriebs- und Abtriebsseite besteht. Laufen beide Schaufelräder synchron, bricht der Kreislauf zusammen und es wird kein Drehmoment mehr übertragen. Dabei wird in der Regel eine hydrodynamische Kupplung im Nennbetrieb auf 2 bis 3 Prozent Schlupf ausgelegt, das heißt der Wirkungsgrad liegt dann bei circa 97 bis 98 Prozent. Zur Verbesserung des Wirkungsgrades ist es erforderlich, eine Reibungskupplung parallel zu schalten. Um jedoch die aufgrund der hydrodynamischen Leistungsübertragung besonders vorteilhaften Anlaufeigenschaften der hydrodynamischen Kupplung, insbesondere die sanfte Beschleunigung größter Massen bei nahezu null Verschleiß beizubehalten, darf diese Reibungskupplung erst bei geringem Schlupf durchgeschalten werden. Die Ausführung der Parallelschaltung der Reibungskupplung und deren Anordnung beziehungsweise Zuordnung zur hydrodynamischen Kupplung ist aus den oben genannten Druckschriften in verschiedenen Ausführungen bekannt. Bei der in der Druckschrift DE 31 19 171 beschriebenen Ausführung umfaßt die Reibungskupplung zwei Kupplungshälften, welche durch einen fliehkraftabhängigen Flüssigkeitsdruck betätigbar sind. Mit der einen Kupplungshälfte rotiert dabei ein die Kupplung betätigendes Schaltelement, vorzugsweise ein in Achsrichtung verschiebbarer Kolben und ein mit Flüssigkeit befüllbarer Druckraum, in dem sich beim Rotieren ein fliehkraftabhängiger, im Sinne des Schließens der Schaltkupplung wirkender Flüssigkeitsdruck aufbaut. In der genannten Kupplungshälfte ist dazu für die Flüssigkeit ein vom Schaltelement separater Vorratsraum vorgesehen, der mit dem Druckraum über wenigstens eine Flüssigkeitsleitung verbunden ist. Ein Steuerelement steuert in Abhängigkeit von der Drehzahi der genannten Kupplungshälfte den Füllungsgrad des Druckraumes mit Flüssigkeit. Dabei sind bei näherer Anordnung des Vorratsraumes an der Kupplungsdrehachse als der Druckraum die den Druckraum begrenzende Stirnfläche derart aneinander angepaßt, daß das Volumen des Druckraumes bei geöffneter Schaltkupplung nahezu den Wert Null annimmt. Bei Kopplung einer derartigen Kupplung mit einer hydrodynamischen Kupplung ist dabei die Sekundärwelle, das heißt die mit dem Turbinenrad verbundene Welle, mit der einen Kupplungshälfte der Reibkupplung verbunden. Bei Schließung der Kupplung erfolgt eine synchrone Rotation von Pumpenrad und Turbinenrad der hydrodynamischen Kupplung. Bei dieser Ausführung ist die Synchronkupplung außerhalb der hydrodynamischen Kupplung angeordnet und muß mit dieser in entsprechender Weise gekoppelt werden, was sich in einer erheblichen Vergrößerung des Bauraumbedarfs in axialer Richtung niederschlägt und zudem den konstruktiven Aufwand erheblich erhöht.

Bei den in den unter 2 bis 4 genannten Druckschriften beschriebenen Ausführungen ist die als Reibungskupplung ausgeführte Synchronkupplung in der hydrodynamischen Kupplung integriert oder bildet mit dieser eine bauliche Einheit. Bei der unter 2 genannten Druckschrift sind dem Außenrad die Funktion des Pumpenrades und dem Innenrad die Funktion des Turbinenrades zugeordnet. Die Kupplungsschale, welche das Turbinenrad umschließt ist in axialer Richtung verlängert ausgeführt und wird als Trommel verwendet, in welcher Fliehgewichte rotieren, die durch Mitnahmeelemente am Innenrad angetrieben werden. Neben dem erhöhten Bauraumbedarf besteht ein erheblicher Nachteil in der besonderen Gestaltung des Innenrades, welches mit Mitnahmeelementen für die Fliehgewichte ausgestattet werden muß, was bereits bei der Herstellung des Innenrades, der Auslegung sowie der Wahl des verwendeten Werkstoffes mit zu berücksichtigen ist. Die Mitnahmeelemente sind dabei entsprechend der vorgeschlagenen Lösung mit dem Innenrad verschraubt, wobei sich dadurch der Montageaufwand ebenfalls erheblich vergrößert. Des weiteren sind Störungen der Funktionsweise nicht auszuschließen, da während des Betriebes ein Lösen der Verschraubungen zu erheblichen Schäden führen kann.

Bei den in den unter 3 und 4 genannten Druckschriften beschriebenen Kupplungsausführungen wird dem Innenrad die Funktion des Pumpenrades zugewiesen und dem Außenrad die Funktion des Turbinenrades. Auch hier wird die Synchronkupplung in einem verlängert ausgeführten Bereich eines der Elemente, insbesondere des Innenrades integriert, indem dieser verlängerte Bereich als Trommel ausgebildet wird, in welchem Fliehgewichte rotieren, die jedoch über Mitnahmeelemente am Außenrad, insbesondere dem Turbinenrad angetrieben werden. Auch diese Lösung weist in Einbaulage in axialer Richtung einen erheblichen Bauraumbedarf auf. Der verlängerte Bereich muß bei der Herstellung des Pumpenrades mit berücksichtigt werden, entweder bei einteiliger Ausführung bei der Erstellung der Gußform oder über eine zusätzliche stoffschlüssige Verbindung mit dem Pumpenrad verbunden werden. Im anderen Fall sind entsprechende Verbindungselemente vorzusehen, wodurch neben dem fertigungstechnischen Aufwand ein erhöhter Montageaufwand zu verzeichnen ist.

Die im Stand der Technik bekannten hydrodynamischen Kupplungen mit Synchronkupplungen - entweder zugeordnet oder integriert - weisen alle den Nachteil auf, daß die Baulänge in axialer Richtung gegenüber einer konventionellen hydrodynamischen Kupplung ohne Synchronisierung erheblich vergrößert ist. Als weitere Nachteile sind der erhöhte konstruktive Aufwand, Fertigungsaufwand und Montageaufwand und damit erheblich erhöhte Kosten zu sehen. Des weiteren sind aufgrund der zu realisierenden Verbindungen zwischen den einzelnen Elementen bei Integration der Synchronkupplung in die hydrodynamische Kupplung Fehlfunktionen beziehungsweise Störungen nicht auszuschließen, wie sie sich bei Lösung der Mitnahmeelemente und damit auch der Fliehkörper ergeben, was zu erheblichen, mitunter auch irreparablen Beschädigungen der einzelnen Elemente führen kann.

Eine gattungsgemäße Kupplung ist aus dem Dokument FR 2 166 464 bekannt.

Der Erfindung liegt daher die Aufgabe zugrunde, eine hydrodynamische Kupplung der eingangs genannten Art mit einer Synchronkupplung derart weiterzuentwickeln, daß die genannten Nachteile vermieden werden. Insbesondere ist eine Lösung anzustreben, welche sich durch einen geringen konstruktiven Aufwand, geringe Baugröße, geringen Fertigungsund Montageaufwand und damit geringe Kosten auszeichnet. Bezüglich der Funktionsweise sind jedoch gegenüber den aus dem Stand der Technik bekannten hydrodynamischen Kupplungen keine Einschränkungen zu erlauben.

Die erfindungsgemäße Lösung ist durch die Merkmale des Anspruchs 1 charakterisiert. Vorteilhafte Ausgestaltungen sind in den Unteransprüchen beschrieben,

In einer hydrodynamischen Kupplung, umfassend wenigstens zwei Schaufelräder - ein Außenrad und ein, von einer mit dem Außenrad koppelbaren Kupplungsschale umschlossenes Innenrad -, ist eine Synchronkupplung integriert, wobei diese wenigstens ein erstes Kupplungselement und ein zweites Kupplungselement aufweist, die miteinander wenigstens mittelbar reibschlüssig in Wirkverbindung treten können, wobei die beiden Elemente von Elementen der hydrodynamischen Kupplung gebildet werden, insbesondere dem Innenrad und der Kupplungsschale. Zu diesem Zweck weist das Innenrad wenigstens zwei Segmete auf, welche Fliehkörper bilden, die in Abhängigkeit der Fliehkraft einen Reibschluß zwischen dem Innenrad beziehungsweise den einzelnen Segmenten des Innenrades, auch als Innenradsegmente bezeichnet, und der Kupplungsschale ermöglichen. Die einzelnen Segmente des Innenrades sind dazu derart geführt, daß diese wenigstens in radialer Richtung beweg- bzw. verschiebbar sind, jedoch in Umfangsrichtung in Rotationsrichtung drehfest mit einem, mit der Antriebsseite oder der Abtriebsseite verbindbaren Element verbindbar sind.

Bezüglich der Ausgestaltung des Innenrades bzw. der einzelnen Segmente bestehen eine Vielzahl von Möglichkeiten. Das Vorsehen der Segmente erfolgt im einfachsten Fall durch Unterteilung des Innenrades in eine Mehrzahl von Segmenten, die alle radial verschiebbar, jedoch in Umfangsrichtung drehfest mit dem Antrieb oder Abtrieb koppelbar sind. Die Unterteilung des Innenrades erfolgt dabei immer im beschaufelten Bereich des Innenrades in Umfangsrichtung, so daß bei Aneinanderreihung der Segmente in Umfangsrichtung die Baueinheit Innenrad gebildet wird.

Die erfindungsgemäße Lösung ermöglicht es, daß auf einfache Art und Weise eine Synchronkupplung in eine hydrodynamische Kupplung integriert werden kann, wobei die Integration keinerlei zusätzlichen Platzbedarf gegenüber einer konventionellen hydrodynamischen Kupplung ohne Synchronkupplung erfordert und damit beispielsweise ohne Vergrößerung der Baullänge in Antriebssystemen mit hydrodynamischer Kupplung bei Bedarf nachgerüstet werden kann. Neben der Beibehaltung der Baulänge in axialer Richtung gegenüber einer konventionellen Ausführung ohne Synchronkupplung erhöht sich auch die Anzahl der erforderlichen Bauelemente kaum. Der konstruktive und fertigungstechnische Aufwand ist gering. Die Kosten für eine derartige Kupplung sind gering. Die Synchronkupplung übemimmt dabei die Funktion einer Überbrückungskupplung, da der hydrodynamische Leistungszweig durch die mechanische Druckkupplung umgangen wird. Die Synchronkupplung kann daher auch als Überbrük-

kungskupplung bezeichnet werden.

Bezüglich der Ausbildung der Segmente am Innenrad bestehen eine Vielzahl von Möglichkeiten. Vorzugsweise erfolgt eine Unterteilung in eine Mehrzahl von Segmenten, insbesondere drei Segmenten, welche in Umfangsrichtung aneinandergereiht die Baueinheit Innenrad bilden und die in ihren geometrischen Abmessungen und der Form identisch sind. Diese Ausführung bietet den Vorteil der einfachen Gestaltung der Führung für die Segmente, beipsielsweise in Form einer dreieckigen Profilwelle- bzw. Nabe. Die Fertigung der einzelnen Segmente erfolgt dabei vorzugsweise aus einem einstückigen Schaufelrad, welches beispielsweise mittels mechanischer Trennverfahren in die einzelnen Segmente unterteilt wird. Bezüglich der verwendeten Trennverfahren können unterschiedliche Trennverfahren zur Anwendung gelangen, vorzugsweise werden jedoch Trennverfahren verwendet, die keine Oberflächennachbehandlung mehr erfordern und auch nur geringen Materialverschnitt aufweisen.

Zur Realisierung der radialen Verschiebbarkeit der einzelnen Innenradsegmente und der zumindest bei Drehmomentübertragung erfolgenden Führung in Umfangsrichtung sind vorzugsweise entsprechende Mittel vorgesehen. Diese Mittel zur Führung in Umfangsrichtung und in radialer Richtung können ebenfalls verschiedenartig ausgeführt sein. Wesentlich ist lediglich, daß zwischen den einzelnen Segmenten des Innenrades und den Mitteln zur Führung eine Drehmomentübertragung möglich ist und des weiteren eine Bewegbarkeit in radialer Richtung gewährt wird. Dies wird im einfachsten Fall mittels formschlüssiger Verbindungen realisiert. Die Mittel weisen dazu im enfachsten Fall ein, mit einem entsprechenden Profil versehenes Führungselement, vorzugsweise in Form einer Welle oder Nabe auf. Die Funktionen der Verschiebbarkeit und der Drehmomentenübertragung werden dabei durch die Ausgestaltung der zueinanderweisenden Flächenbereiche an der Profilwelle- bzw. Nabe und den Segmenten des Innenrades ermöglicht. Zur Gewährleistung der Drehmomentübertragung werden vorzugsweise Ausführungen verwendet, welche sich durch eine einfache Ausgestaltung der Mitnahmeelementen an wenigstens einem der zueinanderweisenden Flächenbereiche der Segmente des Innenrades oder der Profilwelle- bzw. Nabe auszeichnen. Denkbar sind dabei die Ausbildung von Vorsprüngen und Ausnehmungen an einem der beiden Elemente - Außenumfang des Führungselementes und/oder Innenumfang der Segmente, die mit im wesentlichen dazu komplementären Ausnehmungen und Vorsprüngen am jeweils gegenüberliegenden Element - Innenumfang des Innenradsegmentes oder Führungselement - in Wirkverbindung treten. Dabei ist es denkbar, daß die einzelnen Segmente des Innenrades hinsichtlich der Bewegbarkeit in Umfangsrichtung entweder

a) fest fixiert sind, d.h. ohne Spiel oder aber
b) vor Übertragung eines Drehmomentes eine Bewegbarkeit in begrenztem Maße in Umfangsrichtung um das Führungselement erlauben, d.h. ein Spiel vorhanden ist. Dies bedeutet, daß im ersten Fall unabhängig vom Auftreten einer Umfangskraft eine drehfeste Verbindung vorliegt, während im zweiten Fall erst unter dem Einfluß einer Umfangskraft eine drehfeste Verbindung zwischen den Segmenten des Innenrades und dem Führungselement erzeugt wird. Die Verschiebbarkeit der Segmente in radialer Richtung ist durch die Kupplungsschale begrenzt.

Eine Möglichkeit der Realisierung einer drehfesten Verbindung in Umfangsrichtung ohne Spiel besteht in der Anbindung der Segmente an die Nabe über Drehgelenke. Dazu ist jedem Segment in Drehrichtung im hinterem Bereich ein Drehgelenk zugeordnet. Die Fliehkraftwirkung bei Rotation bedingt eine Bewegbarkeit des Segmentes um die Drehachse und damit hinsichtlich einer die Bewegung beschreibenden Komponente der in Verschwenkbewegung radialer Richtung

Vorzugsweise werden vom Innenrad der hydrodynamischen Kupplung wenigstens drei Fliehkörper gebildet, welche hinsichtlich ihrer Form und den geometrischen Abmessungen identisch ausgeführt sind. Diese werden dabei an einer Profilwelle beziehungsweise -nabe geführt, welche beispielsweise mit der Abtriebsseite beim Einsatz in einem Antriebsstrang verbunden ist. Vorzugsweise erfolgt die Führung ohne erforderlichen Einfluß einer Umfangskraft drehfest in Umfangsrichtung und verschiebbar in radialer Richtung. Die Profilwelle beziehungsweise -nabe weist dabei einen im wesentlichen dreieckigen Querschnitt mit gerundeten Eckenbereichen auf. Diese Eckenbereiche liegen dabei in Einbaulage, daß heißt bei Führung der Segmente des Innenrades am Führungselement bzw. den Mitteln zur Führung, jeweils in einer Ebene, welche der Stoßebene zweier einander benachbart in Umfangsrichtung angeordneter Innenradsegmente entspricht. Die Stoßebene wird dabei durch das Aufeinandertreffen der in Umfangsrichtung zueinanderweisenden Flächenbereiche der Innenradsegmente charakterisiert beziehungsweise liegt im Bereich des Zwischenraumes zwischen den beiden zueinander in Umfangsrichtung in Einbaulage weisenden Flächenbereichen der Innenradsegmente bei Nichtaneinanderstoßen. Eine andere Möglichkeit besteht darin, daß die Mitnahmeelemente jeweils nur in ein Segment eingreifen. Bei einer Ausführung mit drei Segmenten und dreieckiger Profilwelle oder Nabe würde dann jeweils ein Eckenbereich der Profilwelle oder Nabe in eine entsprechende Ausnehmung eines Segmentes eingreifen.

Die konkrete Ausgestaltung des Mitnahmeprofiles ist nicht an eine bestimmte Ausführung gebunden, erfolgt jedoch unter Berücksichtigung der Anzahl der Segmente, so daß in jedem Fall eine Verschiebbarkeit dieser in radialer Richtung und eine Drehmomentenübertragung gewährleistet ist.

Unter einem weiteren Aspekt der Erfindung erfolgt durch die Wahl des Gewichtes der einzelnen Segmente eine Steuerung des Syncnronisationspunktes. Dies bietet den Vorteil, daß je nach Einsatzerfordemis ein direkter Durchtrieb zu einem früheren oder späteren Zeitpunkt bei Vorliegen eines bestimmten Schlupfes erfolgen kann.

in einer Weiterentwicklung der Erfindung sind zur Erhöhung der Verfügbarkeit entsprechende Materialpaarungen der reibschlüssig miteinander in Wirkverbindung bringbaren einzelnen Kupplungselemente, dem ersten Kupplungselement in Form des Innenrades beziehungsweise der Segmente des Innenrades und des zweiten Kupplungselementes in Form der Kupplungsschale zu wählen. Dabei sollte darauf geachtet werden, daß die Reibpaarung möglichst verschleißfrei über eine bestimmte Betriebsdauer ist. Der Reibschluß zwischen dem Innenrad beziehungsweise den einzelnen Segmenten des Innenrades und der Kupplungsschale kann dabei direkt oder indirekt über ein zwischengeordnetes Reibelement erfolgen. Bei direkter Reibverbindung erfolgt bei Fliehkrafteinwirkung eine Anpressung der vom Außenumfang der Innensegmente gebildeten Flächen des Innenrades an die vom Innenumfang der Kupplungsschale gebildete Fläche beziehungsweise den zum Reibschluß erforderlich gebildeten Flächenbereich. Im anderen Fall können jeweils entweder das Innenrad, insbesondere die einzelnen Innenradsegmente im Bereich von deren Außenumfang oder die reibschlüssig mit den Flächen am Außenumfang des Innenrades in Wirkverbindung tretenden Flächenbereiche am Innenumfang der Kupplungsschale mit einem Reibbelag versehen werden. Denkbar ist in diesem Fall auch eine Ausführung beider Elemente mit Reibbelag. Die Ausführungen mit Reibbelag bieten den Vorteil, daß unabhängig von der Art des verwendeten Materials der einzelnen Elemente der Synchronkupplung, erstes Kupplungselement oder zweites Kupplungselement, welche von der Kupplungsschale und dem Innenrad gebildet werden, eine Reibpaarung mit besonders vorteilhaften Eigenschaften erzielt werden kann, wobei gleichzeitig in Abhängigkeit des gewählten Materials eine kostengünstige Herstellung der Elemente der hydrodynamischen Kupplung, Innenrad oder Kupplungsscheibe erzielt wird. Des weiteren besteht auch die Möglichkeit, standardisierte, bereits bei anderen konventionellen hydrodynamischen Kupplungen zum Einsatz gelangende Schaufelräder oder Kupplungsschalen zu nutzen und diese lediglich zum Zweck der günstigen Ausgestaltung der Reibpaarung mit einem Reibbelag zu versehen.

Vorzugsweise wird bezüglich der verwendeten Materialien für das Außenrad und die Kupplungsschale auf konventionell eingesetzte Materialien, beispielsweise Späroguß zurückgegriffen. Über die Wahl des Gewichtes der Fliehkörper und damit der Innensegmente, welches ebenfalls materialabhängig ist, kann ein optimales Übertragungsverhalten im Anfahrbereich gezielt beeinflußt werden. Dabei wird das Erreichen eines Wertes der Leistungskennzahl $\lambda * 10^3$ in einem Bereich zwischen einschließlich 2,0 und 2,5 im Nennbetrieb angestrebt. Dies setzt jedoch voraus, daß die bei der erfindungsgemäß gestalteten Kupplung die Fliehkörper und damit die Innenradsegmente eine geringe Masse aufweisen, z.B. durch gewichtsoptimierte Ausführung oder Wahl eines relativ leichtem Materiales, beispielsweise Aluminium gefertigt werden, während die übrigen Elemente aus beliebigen Material hergestellt werden können. Zur Realisierung einer besonders verschleißfreien Reibpaarung wird dann das Innenrad im Bereich seines Außenumfanges wenigstens in den Bereichen, welche mit der Kupplungsschale unter Fliehkrafteinwirkung eine reibschlüssige Verbindung bilden, mit einem Reibbelag, vorzugsweise in Form von Bronze versehen. Bezüglich der Anordnung des Reibbelages am Innenrad und/oder am Innenumfang der Kupplungsschale bestehen eine Vielzahl von Möglichkeiten. Der Reibbelag kann dabei kraft-, formoder stoffschlüssig mit den entsprechenden Elementen - Außenumfang des Innenrades beziehungsweise Außenumfang der einzelnen Innenradsegmente und Innenumfang der Kupplungsschale verbunden werden.

Unter einem weiteren Aspekt der Erfindung sind zusätzlich Mittel zur Aufnahme der bei Befüllung der hydrodynamischen Kupplung mit einem Betriebsmittel, beispielsweise Öl oder Wasser und der durch die Kopplung des Außenrades mit einer Antriebsmaschine erfolgenden Rotation des Pumpenrades entstehenden Axialkraft auf das Innenrad vorgesehen. Diese werden entweder von den Mitteln zur Führung, insbesondere dem Mitnehmerprofil am Führungselement, beispielseise der Profilwelle beziehungsweise -nabe oder von einer zusätzlichen weiteren Führung am Innenumfang der Kupplungsschale gebildet. Die Mittel zur Aufnahme der Axialkräfte sind dabei für die Aufnahme einer in beiden Richtungen wirkenden Axialkraft auszulegen, da die Axialkraft wechselnd wirkt.

Die erfindungsgemäße Lösung wird nachfolgend anhand von Figuren erläutert. Darin ist im einzelnen folgendes dargestellt:

Fig. 1a und 1b      verdeutlichen in schematisch vereinfachter Darstellung den Grundaufbau einer erfindungsgemäß gestalteten hydrodynamischen Kupplung mit integrierter Synchronkupplung;

Fig. 2      verdeutlicht in schematisch stark vereinfachter Darstellung eine Ausführung der Führung zwischen Innenradsegment und Führungselement;

Fig. 3      verdeutlicht einander gegenübergestellt die Kennlinien einer hydrodynamischen Kupplung ohne Synchronkupplung und einer hydrodynamischen Kupplung mit Synchronkupplung;

Fig. 4       verdeutlicht eine weitere Ausführung einer Führung zwischen Innenradsegment und Führungselement.

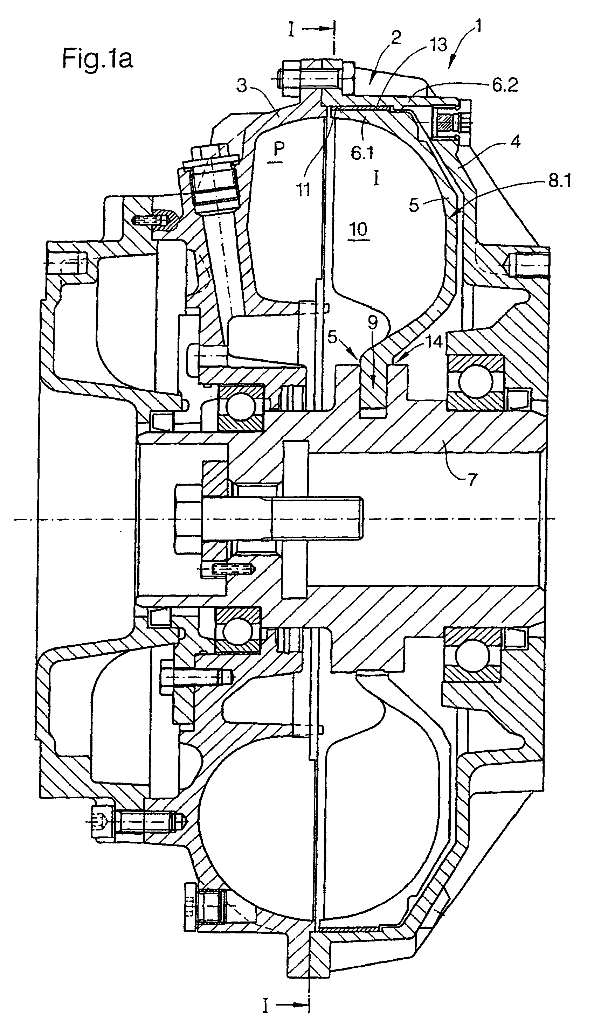

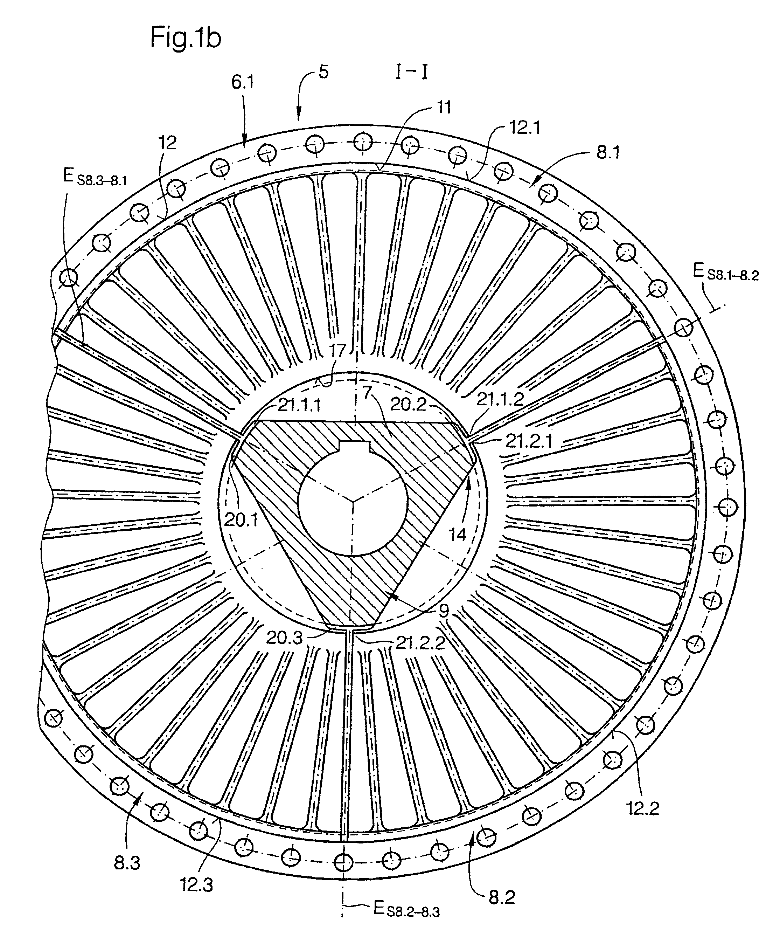

Die Figuren 1a und 1b verdeutlichen in schematisch vereinfachter Darstellung den Grundaufbau einer erfindungsgemäß gestalteten hydrodynamischen Kupplung 1, insbesondere einer Turbokupplung mit integrierter Synchronkupplung 2 in zwei Ansichten. Die Figur 1a verdeutlicht dabei eine Ansicht in einem Radialschnitt, während die Figur 1b eine Ausführung in einer Ansicht I - I gemäß Figur 1a wiedergibt. Die hydrodynamische Kupplung 1, insbesondere die Turbokupplung, umfaßt zwei Schaufelräder, ein Außenrad 3 und ein von einer, mit dem Außenrad 3 gekoppelten Kupplungsschale 4 wenigstens teilweise umschlossenes Innenrad 5. Das Außenrad 3 fungiert dabei vorzugsweise als Pumpenrad während das Innenrad 5 die Funktion des Turbinenrades übernimmt. Das Außenrad 3 ist zu diesem Zweck beim Einsatz in Antriebssträngen wenigstens mittelbar mit der Antriebsseite, insbesondere einer Antriebsmaschine drehfest verbunden, während das, das Turbinenrad bildende Innenrad 5 mit der Abtriebsseite gekoppelt ist. Dies gilt für die Leistungsübertragung in einem Antriebsstrang im Traktionsbetrieb von der Antriebsmaschine zur Abtriebsseite betrachtet. Die Synchronkupplung 2 ist in der hydrodynamischen Kupplung 1 integriert und umfaßt wenigstens zwei reibschlüssig miteinander in Wirkverbindung bringbare Kupplungselemente, ein erstes Kupplungselement 6.1 und ein zweites Kupplungselement 6.2. Erfindungsgemäß werden die Kupplungselemente von der Kupplungsschale 4 und dem Innenrad 5 der hydrodynamischen Kupplung gebildet. Das Innenrad 5 bildet dabei das Kupplungselement 6.1, und ist erfindungsgemäß als mehrteiliger Fliehkraftkörper ausgebildet. Dies bedeutet, daß das Innenrad 5 beziehungsweise das Kupplungselement 6.1 in Umfangsrichtung in wenigstens zwei Segmente unterteilt ist, welche in ihrer Gesamtheit bei Lagerung beziehungsweise Führung auf einer Profilwelle beziehungsweise -nabe 7 unter Fliehkrafteinwirkung wenigstens in radialer Richtung bewegbar sind. Vorzugsweise erfolgt die Unterteilung in drei einzelne Segmente 8.1, 8.2 und 8.3. Die einzelnen Segmente bilden dabei bei Aneinanderreihung in Umfangsrichtung die bauliche Einheit Innenrad 5 und sind vorzugsweise hinsichtlich ihrer geometrischen Abmessungen zueinander identisch ausgeführt. Da über das Innenrad 5 in einer hydrodynamischen Kupplung 1 Drehmomente zu übertragen sind, ist es erforderlich, daß das Innenrad 5, insbesondere die einzelnen Segmente in Umfangsrichtung betrachtet zumindest derart geführt sind, daß eine Mitnahmefunktion gewährleistet ist, während in radialer Richtung eine Bewegbarkeit unter Fliehkraftwirkung der einzelnen Segmente 8.1 bis 8.3 gegeben ist. Zu diesem Zweck sind Mittel zur Führung der einzelnen Segmente 8.1 bis 8.3 vorgesehen, welche in der Regel von der Profilwelle bzw. -nabe 7 gebildet werden. Diese ist wenigstens mittelbar - je nach Funktion des Innenrades 5 - mit der Abtriebsseite drehfest verbindbar. Die Profilwelle beziehungsweise -nabe 7 weist dazu ein entsprechendes Mitnehmerprofil 9 auf.
Während des Anfahrvorganges beim Einsatz der hydrodynamischen Kupplung 1 mit einem Antriebsstrang wird dabei das Drehmoment weiterhin größtenteils hydrodynamisch über den zwischen Außenrad 3 und Innenrad 5 bei Funktion als Pumpenrad P und Turbinenrad T über die sich im torusförmigen Arbeitsraum 10 einstellende Strömung von Betriebsmittel übertragen. Der sanfte Anlauf unter Ausnutzung der Vorteile einer hydrodynamischen Leistungsübertragung bleibt damit erhalten. Allerdings werden mit zunehmender Abtriebsdrehzahl aufgrund der bei Rotation sich einstellenden Fliehkraftwirkung auf die einzelnen Segmente 8.1 bis 8.3 des Innenrades diese immer stärker in Richtung der Kupplungsschale 4 gedrückt, bis aufgrund der Anpressung der Segmente 8.1 bis 8.3 gegen die Kupplungsschale 4 ein Reibschluß entsteht. In diesem Zustand ist die Kupplung aufgrund der Kopplung zwischen Außenrad 3, das heißt Pumpenrad P und Kupplungsschale 4 synchronisiert. Alle Elemente laufen mit der gleichen Drehzahl um.
Da während des Anfahrvorganges die einzelnen Segmente 8.1 bis 8.3 am Innenumfang 11 der Kupplungsschale 4 gleiten, bedeutet dies, daß die einzelnen Elemente der Reibpaarung zumindest im Bereich des zu bildenden Reibschlusses gute Gleit- und Verschleißeigenschaften aufweisen müssen. Maßgeblich für die Verschleißfestigkeit der sich bei der Synchronkupplung 2 einstellenden Reibpaarung zwischen Innenrad 5 und Kupplungsschale 4 sind dabei die sich einstellende Flächenpressung, die spezifische Reibleistung und die spezifische Reibarbeit. Zur Minimierung des Verschleißes werden daher entweder entsprechende Werkstoffe für die Kupplungsschale 4 und das Innenrad 5, insbesondere die einzelnen Segmente 8.1 bis 8.3 verwendet oder diese mit einer entsprechenden Beschichtung versehen. Vorzugsweise wird wenigstens für die Herstellung von Kupplungsschale 4 und Pumpenrad, d.h. Außenrad 3 auf konventionelle Materialien zurückgegriffen, welche üblicherweise für die Herstellung der einzelnen Elemente der hydrodynamischen Kupplung 1 Verwendung finden, beispielsweise Späroguß.
Die Wahl des Materials für das innenrad 5 bzw. die einelnen Innenradsegmente 8.1 bis 8.3 werden nachfolgende Überlegungen berücksichtigt. Dabei ist es zur Erhöhung der Verfügbarkeit vorteilhaft, eine geeignete Reibpaarung zwischen Kupplungsschale 4 und den Segmenten 8.1 bis 8.3 des Innenrades 5 vorzusehen. Dabei werden entweder an einem der Elemente oder an beiden - insbesondere am Innenumfang 11 der Kupplungsschale und am Außenumfang 12 des Innenrades 5, insbesondere jeweils am Außenumfang 12.1 des Segmentes 8.2 und 12.3 des Segmentes 8.3 Beschichtungen mit einem Reibbelag 13 vorgesehen. Dabei kann der Reibbelag zum einen lediglich am Innenumfang 11 der Kupplungsschale 4 oder am Außenumfang 12 des Innenrades 5 beziehungsweise der einzelnen Segmente 8.1 bis 8.3 angebracht werden, denkbar ist jedoch auch, beide - die Kupplungsschale 4 an deren Innenumfang 11 und das Innenrad 5 am Außenumfang 12 beziehungsweise den einzelnen Außenumfängen 12.1 bis 12.3 in den einzelnen Segmenten 8.1 bis 8.3 mit einem entsprechenden Reibbelag zu beschichten -, wobei in diesem Fall Reibpaarungen mit gleichen Materialien oder aber verschiedenen Materialien erzeugt werden können. Da die Art des verwendeten Werkstoffes bei der Auslegung der Kupplung auch einen Einfluß auf die aufgrund der Fliehkraft tatsächlich einsetzenden Wirkung hat, wird zur Ermittlung der spezifischen Belastung der hydrodynamischen Kupplung 1 eine dimensionslose Leistungsziffer $\lambda \cdot 10^3$ eingeführt. Über diesen werden entsprechende Leistungsbereiche definiert, wobei ein Wert von < 1 den unteren Leistungsbereich definiert, ein Wert zwischen 1 - 1,5 den mittleren Leistungsbereich charakterisiert und ein Wert > 1,5 für den oberen Leistungsbereich steht. Im normalen Nennbetrieb wird dabei für die Synchronisation, das heißt die Rotation der einzeinen Schaufelräder - Außenrad 3 und Innenrad 5 mit gleicher Drehzahl ein Wert zwischen einschließlich 2,0 und 2,5 angestrebt. Die dimensionslose Leistungsziffer $\lambda \cdot 10^3$ ergibt sich dabei aus folgender Beziehung

$$\lambda \cdot 10^3 = P \cdot 10^3 / (p_{FL} \cdot D_P{}^5 \cdot \omega_1{}^2)$$

mit

P$_1$ -    übertragbare Leistung
P$_{FL}$ -    Anpreßdruck
D$_P$ -    Durchmesser am Außenumfang des Pumpenrades
$\omega_1$ -    Winkelgeschwindigkeit

Um die durch die Leistungskennziffer beschreibbare spezifische Belastung zu senken muß die Masse des Fliehgewichtes möglichst gering gehalten werden. Da in der Regel an der Kontur des innenrades bei einer hydrodynamiscnen Kupplung 1 wenig verändert werden kann, besteht die einzige Möglichkeit einen entsprechenden Werkstoff zu wählen. Vorzugsweise wird dabei ein verhältnismäßig leichter Werkstoff gewählt, beispielsweise Aluminium. Allerdings eignet sich dieser in der Regel nicht für eine Reibverbindung, weshalb ein entsprechender Reibbelag 13 am Außenumfang 12, insbesondere an den einzelnen Außenumfängen 12.1 bis 12.3 der einzelnen Segmente 8.1 bis 8.3 des Innenrades 5 vorgesehen werden. Als Reibbelag findet dabei eine Bronzebeschichtung Verwendung, welche entweder am Umfang des Innenrades 5 eingegossen oder aufgespritzt wird.

Die konkrete Wahl der Werkstoffe für die einzelnen Elemente - Außenrad 3, Innenrad 5 und Kupplungsschale 4 - erfolgt in Abhängigkeit des Einsatzfalles und des gewünschten Übertragungsverhaltens, insbesondere des sich einstellenden Synchronisationspunktes und liegt bei Kenntnis der Zusammenhänge im Ermessen des zuständigen Fachmannes.

Des weiteren entstehen aufgrund der hydrodynamischen Leistungsübertragung bei Befüllung der hydrodynamischen Kupplung 1 mit einem Betriebsmittel, beispielsweise Öl oder Wasser und Rotation des Pumpenrades, vorzugsweise des Außenrades 3 und der Kopplung mit einer Antriebsmaschine zusätzlich eine Axialkraft auf das Innenrad 5. Zur Aufnahme dieser Axialkraft auf das Innenrad 5, insbesondere die einzelnen Segmente 8.1 bis 8.3 des Innenrades 5 sind entsprechende Mittel 14 zur Aufnahme der Axialkraft vorgesehen. Diese werden entweder von den Mitteln zur Führung 9, insbesondere dem Mitnehmerprofil 9 an der Profilwelle beziehungsweise -nabe 7 gebildet oder mittels einer, hier nicht dargestellten zusätzlichen weiteren Führung 15 am Umfang der Kupplungsschale 4 aufgenommen. Die Mittel zur Aufnahme der Axialkräfte 14 sind dabei für die Aufnahme einer in beiden Richtungen wirkenden Axialkraft auszulegen, da die Axialkraft wechselnd wirkt. Vorzugsweise wird entsprechend den Figuren 1a und 1b die Mittel zur Aufnahme der Axialkräfte 14 am Innenrad 5 angeordnet.

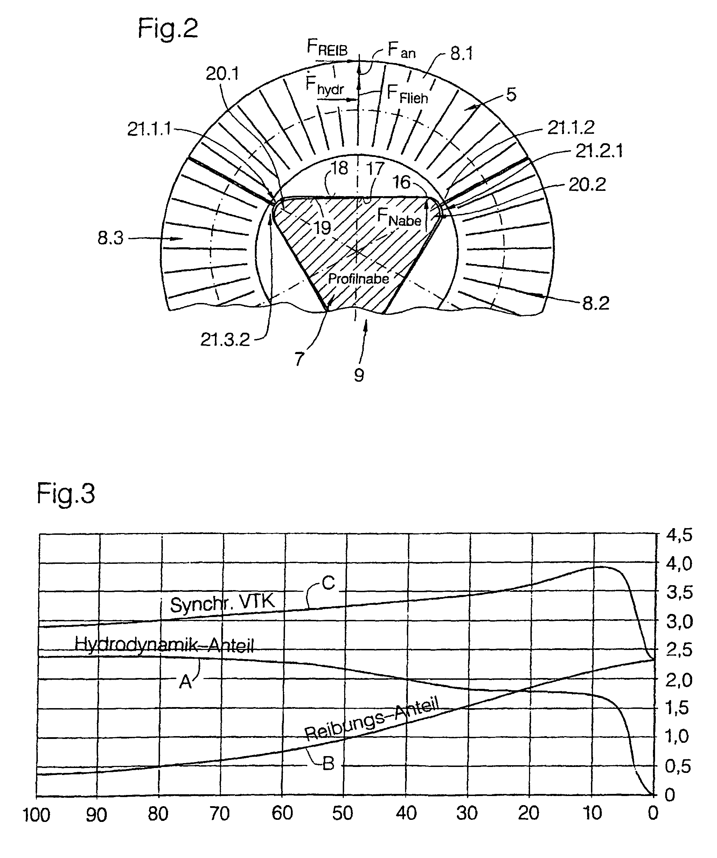

Die Figur 2 verdeutlicht im wesentlichen in stark abstrahierter Form anhand einer Ansicht gemäß Figur 1b auf das Innenrad 5 der hydrodynamischen Kupplung 1 dem Angriff der Kräfte während der Kraftübertragung, wobei Flächenbelastungen zur Verdeutlichung vereinfacht als Punktlasten angenommen werden. Dabei ist für das durch die Reibung aufgrund der Fliehkraftwirkung übertragbare Drehmoment zusätzlich zum Übertragen vom hydrodynamischen Moment die Anpresskraft $F_{An}$, die die Innenradsegmente 8.1 bis 8.3 auf die Kupplungsschale 4, insbesondere im Bereich von deren Innenumfang 11 anpreßt, ausüben. Zum Großteil besteht diese Anpresskraft $F_{An}$ aus der Fliehkraft $F_{Flieh}$. Durch die Ausgestaltung der Mittel zur Führung 9, insbesondere der Profilwelle beziehungsweise -nabe 7, ergeben die hydrodynamische Kraft $F_{hydr}$ und die Reibungskraft $F_{Reib}$ ein Moment, um den Punkt 16, das die Anpresskraft $F_{An}$ der Innenradsegmente 8.1 bis 8.3 an die Kupplungsschale 4 noch zusätzlich erhöhen. Das Mitnehmerprofil 9 ist dabei derart ausgeführt, daß aufgrund der hydrodynamischen Kräfte $F_{hydr}$, welche im wesentlichen in Umfangsrichtung wirken, und der Gestaltung des Mitnehmerprofils 9 am Innenumfang 17 des Innenrades 5, insbesondere 17.1 bis 17.3 an den Segmenten 8.1 bis 8.3 eine Mitnahme der Profilwelle beziehungsweise -nabe 7 bei funktioneller Zuordnung der Funktion des Turbinenrades T zum Innenrad 5 erzielt wird. Dieses bedeutet, daß die miteinander in Eingriff stehenden Bereiche von Profilwelle beziehungsweise -nabe 7 und den einzelnen Segmenten 8.1 bis 8.3 derart ausgeführt sind, daß eine Bewegbarkeit in Umfangsrichtung um die Welle beziehungsweise Nabe nicht oder nur in stark begrenztem Umfang erlaubt ist, des weiteren jedoch die Bewegbarkeit der einzelnen Segmentes 8.1 bis 8.n in radialer Richtung nicht beeinträchtigt wird. Die Profilgestaltung am Innenrad 5 beziehungsweise an den Innenumfängen 17.1 bis 17.3 der einzelnen Segmente 8.1 bis 8.3 und dazu komplementär an der Profilwelle beziehungsweise Profilnabe 7 erfolgt dabei derart, daß diese symmetrisch bezogen auf die Symmetrielinie des Innensegmentes ausgeführt ist. Das heißt, beide Profile weisen jeweils einen ebenen Flächenbereich 18 beziehungsweise 19 auf, welche aneinander zum Anliegen kommen, wobei beidseitig dieses Flächenbereiches ein Anschlag vorgesehen ist, welcher durch die konkrete Ausgestaltung des Innenradsegmentes 8.1 bis 8.3 beziehungsweise dazu komplementär der Nabe realisiert wird. Vorzugsweise weist dazu die Profilwelle beziehungsweise -nabe 7 entsprechende Vorsprünge 20.1 bis 20.3 auf, wobei jeweils ein Vorsprung 20.1 bis 20.3 jeweils in die Ausnehmung 21.1.1 beziehungsweise 21.1.1 und 21.2.1 zweier in Umfangsrichtung einander benachbarter Segmente 8.1 und 8.2 im Bereich von deren Stoßebene $E_{S\,8.1\text{-}8.2}$ eingreift. Denkbar wäre auch eine Ausführung mit Vorsprüngen, welche jeweils nur in dazu komplementäre Ausnehmungen an einem Segment eingreifen, wobei jedoch der Vorsprung derart hinsichtlich seiner Erstrekkung in radialer Richtung gewählt wird, das eine bestimmte definierte Verschiebung des Segmentes entlang des Vorsprunges ermöglicht wird. Das Mitnehmerprofil 9 ist somit lediglich derart ausgeführt, daß in Umfangsrichtung des Innenrades 5 eine Drehmomentübertragung zwischen Innenrad 5 beziehungsweise den einzelnen Segmenten 8.1 bis 8.3 ermöglicht wird, während in radialer Richtung eine Verschiebbarkeit der Segmente 8.1 bis 8.5 gegenüber der Profilwelle beziehungsweise -nabe 7 möglich ist

Die Figur 3 verdeutlicht einander gegenübergestellt verschiedene Anfahrkennlinien in Form des als Leistungskennwert fungierenden Anfahrkennwertes λ * $10^3$ in Abhängigkeit des sich einstellenden Schlupfes S über die Zeitdauer des Anfahrvorganges. Dabei gibt die mit A bezeichnete Kennlinie eine Kennlinie für eine konventionelle hydrodynamische Kupplung ohne Synchronisation wieder, während die mit B charakterisierte Kennlinie lediglich die Kennlinie für den Reibungsanteil darstellt und mit C die Anfahrkennlinie einer erfindungsgemäß gestalteten hydrodynamischen Kupplung 1 mit Synchronkupplung 2 wiedergibt. Daraus wird ersichtlich, daß aufgrund der Synchronisierwirkung im Bereich geringen Schlupfes, insbesondere bei einem Schlupf von <10 eine erhebliche Steigerung des Anfahrwertes erzielt wird.

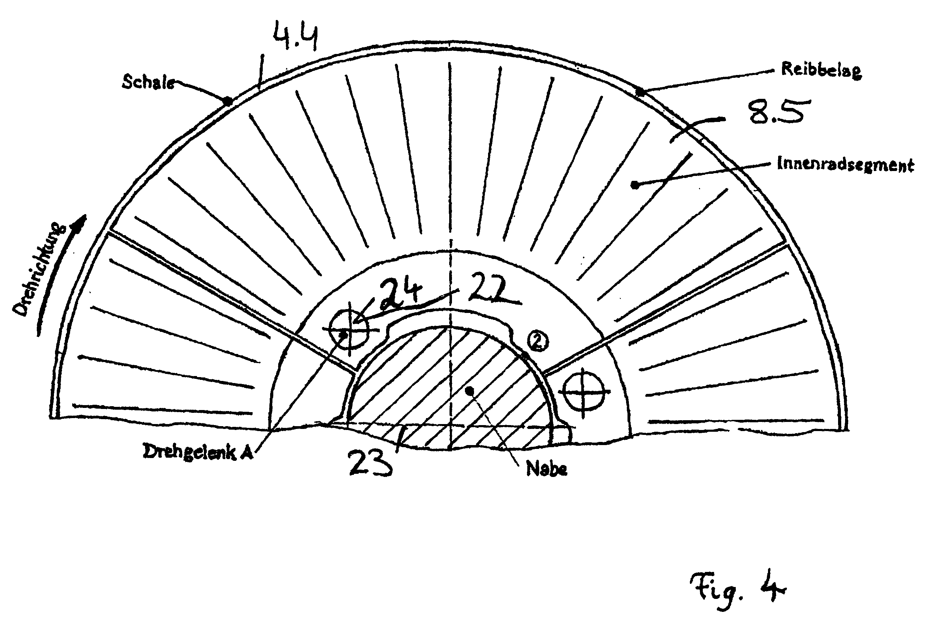

Figur 4 verdeutlicht in schematisch stark vereinfachter Darstellung eine weitere Möglichkeit der Realisierung einer drehfesten Verbindung zwischen den Segmenten 8.4 des Innenrades 5.4 mittels einer Anbindung über beispielsweise jeweils einen Bolzen 22, welcher zwischen der Nabe 23 und einem Segment 8.4 des Innenrades 8.5 ein Drehgelenk 24 bildet. Das Drehgelenk 24 ermöglicht die Mitnahme der Segmente 8.4 in Umfangsrichtung und mehr Fliehkrafteinwirkung eine Bewegung der Innenradsegmente 8.5, welche sich durch wenigstens eine Komponente in radialer Richtung beschreiben läßt, so daß ein Reibschluß zwischen Innenradsegment 8.4 und der Kupplungsschale 4.4 realisiert wird. Das Drehgelenk 24 ist zu diesem Zweck im radial inneren Bereich des Innenradsegmentes 8.4 und im dargestellten Fall in Rotationsrichtung betrachtet im hinteren Bereich des Innenradsegmentes 8.5 angeordnet.

Bezugszeichenliste

| | |
|---|---|
| 1 | Hydrodynamische Kupplung |
| 2 | Synchronkupplung |
| 3 | Außenrad |
| 4 | Kupplungsschale |
| 5; 5.4 | Innenrad |
| 6.1 | Erstes Kupplungselement |
| 6.2 | Zweites Kupplungselement |
| 7 | Profilwelle beziehungsweise Profilnabe |
| 8 | Segmente des Innenrades |
| 8.1 - 8.4 | Segmente des Innenrades |
| 9 | Mittel zur Führung, insbesondere Mitnehmerprofil |
| 10 | Torusförmiger Arbeitsraum |
| 11 | Innenumfang der Kupplungsschale |
| 12 | Außenumfang des Innenrades |
| 12.1 - 12.3 | Außenumfang der Innenradsegmente 8.1 bis 8.3 |
| 13 | Reibbelag |
| 14 | Mittel zur Aufnahme der Axialkräfte |
| 15 | Führung |
| 16 | Punkt |
| 17 | Innenumfang |
| 18 | Ebene Fläche |
| 19 | Ebene Fläche |
| 20.1 - 20.3 | Vorsprünge an der Profilwelle beziehungsweise Profilnabe 7 |
| 21.1.1 | Ausnehmungen |
| 21.1.2 | Ausnehmungen |
| 21.3.1 | Ausnehmungen |
| 21.3.2 | Ausnehmungen |
| 22 | Bolzen |
| 23 | Nabe |
| 24 | Drehgelenk |
| $E_{S\,8.1\text{-}8.2}$ | Stoßebene |
| λ * $10^3$ | Leistungskennzahl, Anfahrkennwert |
| $F_{Reib}$ | Reibungskraft |
| $F_{hydr}$ | Hydrodynamische Kraft |
| $F_{An}$ | Anpreßkraft |

P_I    Übertragbare Leistung

**Patentansprüche**

1. Hydrodynamische Kupplung (1)

   1.1 mit wenigstens zwei Schaufelrädern, einem Außenrad (3) und einem, von einer, mit dem Außenrad (3) gekoppelten Kupplungsschale (4) wenigstens teilweise umschlossenen Innenrad (5);
   1.2 mit einer Synchronkupplung (2), umfassend wenigstens zwei Kupplungselemente (6.1, 6.2), welche reibschlüssig wenigstens mittelbar miteinander in Wirkverbindung bringbar sind, wobei das zweite Kupplungselement von der Kupplungsschale (4) gebildet ist; **gekennzeichnet durch** die folgenden Merkmale:
   1.3 das Innenrad (5) ist in wenigstens zwei Segmente (8.1, 8.2, 8.3) unterteilt, die in radialer Richtung verschiebbar gelagert und in Umfangsrichtung wenigstens in Rotationsrichtung wenigstens mittelbar drehfest mit der An- oder Abtriebsseite verbindbar sind;
   1.4 das erste Kupplungselement (6.1) wird von den Segmenten (8.1, 8.2, 8.3) des Innenrades (5) gebildet.

2. Hydrodynamische Kupplung (1) nach Anspruch 1, **dadurch gekennzeichnet, daß** die einzeinen Segmente (8.1, 8.2, 8.3) des Innenrades (5) hinsichtlich ihrer Form und der geometrischen Abmessungen identisch ausgeführt sind.

3. Hydrodynamische Kupplung (1) nach einem der Ansprüche 1 oder 2, **dadurch gekennzeichnet, daß** die einzelnen Segmente (8.1, 8.2, 8.3) des Innenrades (5) mit wenigstens einem Teilbereich der durch ihren Außenumfang (12.1, 12.2, 12.3) charakterisierbaren Flächenbereiche mit Flächenbereichen am Innenumfang (11) der Kupplungsschale (4) eine Reibpaarung bilden.

4. Hydrodynamische Kupplung (1) nach einem der Ansprüche 1 bis 3, **dadurch gekennzeichnet, daß** die Flächenbereiche am Außenumfang (12.1, 12.2, 12.3) der Segmente (8.1, 8.2, 8.3) und/oder am Innenumfang (11) der Kupplungsschale (4) mit einem Reibbelag versehen sind.

5. Hydrodynamische Kupplung (1) nach Anspruch 4, **dadurch gekennzeichnet, daß** die Reibpaarung zwischen den Flächenbereichen am Außenumfang (12.1, 12.2, 12.3) der Segmente (8.1, 8.2, 8.3) und/ oder am Innenumfang (11) der Kupplungsschale (4) von den gleichen Materialien gebildet wird.

6. Hydrodynamische Kupplung (1) nach Anspruch 4, **dadurch gekennzeichnet, daß** die Reibpaarung zwischen den Flächenbereichen am Außenumfang (12.1, 12.2, 12.3) der Segmente (8.1, 8.2, 8.3) und/ oder am Innenumfang (11) der Kupplungsschale (4) von unterschiedlichen Materialien gebildet wird.

7. Hydrodynamische Kupplung (1) nach Anspruch 6, **gekennzeichnet durch** die folgenden Merkmale:

   7.1 die Kupplungsschale (4) ist im Bereich ihres Innenumfanges aus Sphäroguß gefertigt;
   7.2 die Segmente (8.1, 8.2, 8.3) sind aus Aluminium gefertigt und im Bereich ihres Außenumfanges (12.1, 12.2, 12.3) mit Bronze beschichtet.

8. Hydrodynamische Kupplung (1) nach einem der Ansprüche 1 bis 7, **gekennzeichnet durch** die folgenden Merkmale:

   8.1 zur radialen Bewegbarkeit und Drehmomentübertragung in Umfangsrichtung sind den Segmenten (8.1, 8.2, 8.3) des Innenrades (5) Mittel zur Führung (9) zugeordnet;
   8.2 die Mittel zur Führung (9) umfassen wenigstens eine, mit einem Mitnehmerprofil versehene Profilwelle und/oder -nabe (7), welche mit einem dazu komplementären Profil an den einzelnen Segmenten (8.1, 8.2, 8.3) einen Formschluß in Umfangsrichtung ermöglichen.

9. Hydrodynamische Kupplung (1) nach Anspruch 8, **dadurch gekennzeichnet, daß** der Formschluß in Umfangsrichtung ohne Radialkrafteinfluß ist.

10. Hydrodynamische Kupplung (1) nach einem der Ansprüche 8 oder 9, **gekennzeichnet durch** die folgenden Merkmale:

   10.1 das Innenrad (5) ist in drei Segmente (8.1, 8.2, 8.3) unterteilt;
   10.2 die Mittel zur Führung (9) umfassen eine Profilwelle oder Profilnabe (7), welche einen dreieckigen Querschnitt aufweist, der **durch** drei Vorsprünge (20.1, 20.2, 20.3) charakterisiert ist;
   10.3 die Vorsprünge (20.1, 20.2, 20.3) greifen in dazu komplementäre Ausnehmungen zweier in Umfangsrichtung einander benachbarter Segmente (8.1 und 8.2) im Bereich von deren Stoßebene $E_{S\,8.1-8.2}$ ein.

11. Hydrodynamische Kupplung (1) nach einem der Ansprüche 1 bis 10, **dadurch gekennzeichnet, daß** Mittel zur Kompensation der bei der hydrodynamischen Leistungsübertragung auftretenden Axialkräfte (14) vorgesehen sind.

**12.** Hydrodynamische Kupplung (1) nach Anspruch 11, **dadurch gekennzeichnet, daß** die Mittel zur Aufnahme der Axialkräfte (14) Anschläge im Bereich des Innenumfanges des Innenrades (5) umfassen.

**13.** Hydrodynamische Kupplung (1) nach Anspruch 11 oder 12, **dadurch gekennzeichnet, daß** die Mittel Anschläge am Innenumfang (11) der Kupplungsschale (4) umfassen.

**Claims**

**1.** Hydrodynamic coupling (1)

1.1 comprising at least two bucket wheels, one outer wheel (3) and one inner wheel (5) which is at least partially enclosed by a coupling shell (4) which is coupled to the outer wheel (3);
1.2 comprising a synchronous coupling (2), comprising at least two coupling elements (6.1, 6.2), which can be brought into operative connection with one another, at least indirectly, in a frictionally locking manner, wherein the second coupling element is formed by the coupling shell (4), **characterised by** the following features:
1.3 the inner wheel (5) is divided into at least two segments (8.1, 8.2, 8.3), which are mounted displaceably in the radial direction and can be connected in a rotationally fixed manner, in the circumferential direction, at least in the direction of rotation, to the drive or output side, at least indirectly; 1.4 the first coupling element (6.1) is formed by the segments (8.1, 8.2, 8.3) of the inner wheel (5).

**2.** Hydrodynamic coupling (1) according to claim 1, **characterised in that** the individual segments (8.1, 8.2, 8.3) of the inner wheel (5) are of identical design with respect to their shape and geometric dimensions.

**3.** Hydrodynamic coupling (1) according to either of claims 1 or 2, **characterised in that** the individual segments (8.1, 8.2, 8.3) of the inner wheel (5), with at least a partial region of the face regions which can be **characterised by** their outer circumference (12.1, 12.2, 12.3), form a friction pairing with face regions on the inner circumference (11) of the coupling shell (4).

**4.** Hydrodynamic coupling (1) according to any of claims 1 to 3, **characterised in that** the face regions on the outer circumference (12.1, 12.2, 12.3) of the segments (8.1, 8.2, 8.3) and/or on the inner circumference (11) of the coupling shell (4) are provided with a friction lining.

**5.** Hydrodynamic coupling (1) according to claim 4, **characterised in that** the friction pairing between the face regions on the outer circumference (12.1, 12.2, 12.3) of the segments (8.1, 8.2, 8.3) and/or on the inner circumference (11) of the coupling shell (4) is formed from the same materials.

**6.** Hydrodynamic coupling (1) according to claim 4, **characterised in that** the friction pairing between the face regions on the outer circumference (12.1, 12.2, 12.3) of the segments (8.1, 8.2, 8.3) and/or on the inner circumference (11) of the coupling shell (4) is formed by different materials.

**7.** Hydrodynamic coupling (1) according to claim 6, **characterised by** the following features:

7.1 in the region of its inner circumference, the coupling shell (4) is produced from nodular cast iron;
7.2 the segments (8.1, 8.2, 8.3) are manufactured from aluminium and are coated with bronze in the region of their outer circumference (12.1, 12.2, 12.3).

**8.** Hydrodynamic coupling (1) according to any of claims 1 to 7, **characterised by** the following features:

8.1 to provide radial mobility and torque transmission in the circumferential direction, guide means (9) are associated with the segments (8.1, 8.2, 8.3) of the inner wheel (5);
8.2 the guide means (9) comprise at least one profiled shaft and/or profiled hub (7) which is provided with a driver profile and, together with a complementary profile on the individual segments (8.1, 8.2, 8.3), allows a positive lock in the circumferential direction.

**9.** Hydrodynamic coupling (1) according to claim 8, **characterised in that** the positive lock in the circumferential direction is without influence from radial force.

**10.** Hydrodynamic coupling (1) according to either of claims 8 or 9, **characterised by** the following features:

10.1 the inner wheel (5) is divided into three segments (8.1, 8.2, 8.3);
10.2 the guide means (9) comprise a profiled shaft or profiled hub (7), which is triangular in cross-section and is **characterised by** three projections (20.1, 20.2, 20.3);
10.3 the projections (20.1, 20.2, 20.3) engage in complementary recesses in two segments (8.1 and 8.2), which adjoin one another in the circumferential direction, in the region of their abutment plane Es 8.1-8.2.

11. Hydrodynamic coupling (1) according to any of claims 1 to 10, **characterised in that** means are provided for compensating for the axial forces (14) which occur during the hydrodynamic power transmission.

12. Hydrodynamic coupling (1) according to claim 11, **characterised in that** the means for absorbing the axial forces (14) comprise stops in the region of the internal circumference of the inner wheel (5).

13. Hydrodynamic coupling (1) according to claim 11 or 12, **characterised in that** the means comprise stops on the inner circumference (11) of the coupling shell (4).


**Revendications**

1. Embrayage hydrodynamique (1)

muni d'au moins deux roues à aubes, d'une roue extérieure (3) et d'une roue intérieure (5) entourée, au moins de manière partielle, d'une enveloppe d'embrayage (4) couplée à la roue extérieure (3),
muni d'un embrayage synchrone (2), comprenant au moins deux éléments d'embrayage (6.1, 6.2) que l'on peut relier l'un à l'autre par friction, au moins de manière indirecte, le deuxième élément d'embrayage étant formé par l'enveloppe d'embrayage (4), **caractérisé par** les caractéristiques suivantes :

la roue intérieure (5) est divisée au moins en deux segments (8.1, 8.2, 8.3) qui sont logés dans le sens radial de manière coulissante et raccordables au côté d'entraînement ou de sortie dans le sens circonférentiel, au moins dans le sens de rotation, au moins de manière indirectement résistante à la torsion,
le premier élément d'embrayage (6.1) est formé par les segments (8.1, 8.2, 8.3) de la roue intérieure (5).

2. Embrayage hydrodynamique (1) selon la revendication 1, **caractérisé en ce que** les différents segments (8.1, 8.2, 8.3) de la roue intérieure (5) sont configurés de manière identique en ce qui concerne leur forme et les dimensions géométriques.

3. Embrayage hydrodynamique (1) selon l'une quelconque des revendications 1 ou 2, **caractérisé en ce que** les différents segments (8.1, 8.2, 8.3) de la roue intérieure (5), avec au moins une sous-zone des zones de surface caractérisables par leur circonférence externe (12.1, 12.2, 12.3), forment un couple frottant avec des zones de surface sur la circonférence interne (11) de l'enveloppe d'embrayage (4).

4. Embrayage hydrodynamique (1) selon l'une quelconque des revendications 1 à 3, **caractérisé en ce que** les zones de surface sur la circonférence externe (12.1, 12.2, 12.3) des segments (8.1, 8.2, 8.3) et / ou sur la circonférence interne (11) de l'enveloppe d'embrayage (4) sont munies d'une garniture de friction.

5. Embrayage hydrodynamique (1) selon la revendication 4, **caractérisé en ce que** le couple frottant, entre les zones de surface sur la circonférence externe (12.1, 12.2, 12.3) des segments (8.1, 8.2, 8.3) et / ou sur la circonférence interne (11) de l'enveloppe d'embrayage (4), est formé des mêmes matériaux.

6. Embrayage hydrodynamique (1) selon la revendication 4, **caractérisé en ce que** le couple frottant, entre les zones de surface sur la circonférence externe (12.1, 12.2, 12.3) des segments (8.1, 8.2, 8.3) et / ou sur la circonférence interne (11) de l'enveloppe d'embrayage (4), est formé de matériaux différents.

7. Embrayage hydrodynamique (1) selon la revendication 6, **caractérisé par** les caractéristiques suivantes :

l'enveloppe d'embrayage (4) est fabriquée en fonte nodulaire au niveau de sa circonférence interne,
les segments (8.1, 8.2, 8.3) sont fabriqués en aluminium et recouverts de bronze au niveau de leur circonférence externe (12.1, 12.2, 12.3).

8. Embrayage hydrodynamique (1) selon l'une quelconque des revendications 1 à 7, **caractérisé par** les caractéristiques suivantes :

pour permettre la mobilité radiale et la transmission du couple dans le sens circonférentiel, des dispositifs de guidage (9) sont attribués aux segments (8.1, 8.2, 8.3) de la roue intérieure (5),
les dispositifs de guidage (9) comprennent au moins un arbre profilé et / ou un moyeu profilé (7), munis d'un profil d'entraînement, qui, au moyen d'un profil correspondant, sur les différents segments (8.1, 8.2, 8.3), permettent une fermeture géométrique dans le sens circonférentiel.

**9.** Embrayage hydrodynamique (1) selon la revendication 8, **caractérisé en ce que** la fermeture géométrique, dans le sens circonférentiel, est sans influence sur l'effort radial.

**10.** Embrayage hydrodynamique (1) selon l'une quelconque des revendications 8 ou 9, **caractérisé par** les caractéristiques suivantes:

> la roue intérieure (5) est divisée en trois segments (8.1, 8.2, 8.3),
> les dispositifs de guidage (9) comprennent un arbre profilé ou un moyeu profilé (7) qui présente une coupe transversale triangulaire **caractérisée par** trois saillies (20.1, 20.2, 20.3),
> les saillies (20.1, 20.2, 20.3) s'engrènent dans les creux correspondants des deux segments (8.1 et 8.2) adjacents, dans le sens circonférentiel, au niveau de leur plan de contact $E_{S\ 8.1-8.2}$.

**11.** Embrayage hydrodynamique (1) selon l'une quelconque des revendications 1 à 10, **caractérisé en ce que** des dispositifs de compensation des forces axiales (14), apparaissant lors de la transmission de puissance hydrodynamique, sont prévus.

**12.** Embrayage hydrodynamique (1) selon la revendication 11, **caractérisé en ce que** les dispositifs d'absorption des forces axiales (14) comprennent des butées au niveau de la circonférence interne de la roue intérieure (5).

**13.** Embrayage hydrodynamique (1) selon la revendication 11 ou 12, **caractérisé en ce que** les dispositifs comprennent des butées sur la circonférence interne (11) de l'enveloppe d'embrayage (4).

Fig.1a

## Fig.1b

Fig.2

Fig.3

Fig. 4